# EUROPÄISCHE PATENTANMELDUNG

(11) **EP 3 142 233 A1**
(43) Veröffentlichungstag der Anmeldung: **15.03.2017**
(21) Anmeldenummer: 15184581.5
(22) Anmeldetag: 10.09.2015
(51) Int. Cl.: H02K 15/00, H01F 41/12, H01F 41/061

(54) **VERFAHREN ZUR HERSTELLUNG EINER FORMSPULE FÜR EINE ELEKTRISCHE MASCHINE MITTELS FLACHDRAHT**

(71) Anmelder: Von Roll Schweiz AG, 4226 Breitenbach (CH)
(72) Erfinder: GRÄSSLI, Walter, 5233 Stilli (CH); STEPHAN, Carl-Ernst, 5242 Lupfig (CH)
(74) Vertreter: Rutz, Andrea

(57) **Zusammenfassung**

Es wird ein Verfahren zur Herstellung einer Formspule (3) für den Einsatz in einem Stator oder Rotor einer elektrischen Maschine angegeben. Dabei wird zumindest ein Flachdraht (1) zu einer in Umfangsrichtung durchgehend gebogen ausgebildeten Rundspule (2) gewickelt. Diese Rundspule (2) wird dann mit Isolationsband (54) umwickelt. Anschliessend wird die mit dem Isolationsband (54) umwickelte Rundspule (2) in die endgültige Form einer Formspule (3) gebracht.

## Beschreibung

### TECHNISCHES GEBIET

Die vorliegende Erfindung betrifft ein Verfahren zur Herstellung einer Formspule für den Einsatz in einem Stator oder Rotor einer elektrischen Maschine mittels Flachdraht. Bei der elektrischen Maschine kann es sich insbesondere um einen Elektromotor oder um einen Generator handeln.

### STAND DER TECHNIK

Elektrische Maschinen weisen üblicherweise einen Stator aufgebaut aus einzelnen geschichteten Magnetblechen auf, welcher eine Vielzahl von Zähnen und dazwischen angeordnete Längsnuten hat. In die Längsnuten sind speziell geformte Formspulen eingesetzt. Die Spulen liegen im Statorblechpaket, um im Betrieb mittels eines magnetischen Flusses eine induktive Wechselwirkung mit einem im Statorinneren angeordneten Rotor zu ermöglichen.

Die Formspulen werden meist durch einen oder mehrere Flachdrähte, insbesondere Rechteckleiter, gebildet. Derartige Formspulen sind beispielsweise in der WO 2012/009123 A2 offenbart.

Zur Gewährleistung der Funktion des Generators bzw. Elektromotors und zur Vermeidung von Kurzschlussströmen, sind die Formspulen jeweils mit einem Isolationsband umwickelt. Eine qualitativ hochwertige Isolation der Spulen ist im Hinblick auf die Qualität und die Langlebigkeit der elektrischen Maschine entscheidend. Die Formgebung und die Spulenisolation stellen jedoch oft einen äusserst aufwändigen und kostenintensiven Herstellungsschritt bei der Herstellung von Formspulen dar.

Bei der klassischen Spulenherstellung wird die Formspule in ihrer endgültigen Form, das heisst in derjenigen Form, wie sie in die elektrische Maschine eingesetzt wird und dort verwendet wird, mit Isolationsband umwickelt. Aufgrund der speziellen dreidimensionalen Geometrie von üblichen Formspulen, mit einer relativ schmalen Öffnung, muss die Isolation oft entweder auf mühsame Art und Weise mittels einer meist langsam arbeitenden Spezialmaschine oder sogar von Hand vorgenommen werden.

In der sogenannten Flat Coil Technologie wird ein Flachdraht zu einer flachen Spule gewickelt, welche im Fachjargon auch Fisch genannt wird. Diese flach gewickelte Spule wird mit Isolationsband umwickelt und erst dann in den Bereichen ihrer gebogenen Stirnseiten derart verformt, dass die endgültige dreidimensionale Spulenform erreicht wird. Die Spule kann dadurch während des Isolierens eine etwas grössere Spulenöffnung aufweisen, wodurch ein einfacheres und genaueres, insbesondere maschinelles Umwickeln der Längsseiten mit Isolationsband ermöglicht wird.

Eine gemäss der Flat Coil Technologie hergestellte Spule ist beispielsweise aus der WO 2012/009123 A2 bekannt. Es wird darin die Verwendung eines mit Epoxidharz getränkten Isolationsbandes vorgeschlagen. Bei kleineren Formspulen, wie sie in kleineren Generatoren und Motoren eingesetzt werden, wie z.B. bei Traktionsmotoren, ist der Zwischenraum des Fisches zu eng, um das Isolationsband automatisch zu bewickeln. Die Vorteile der Flat Coil Technologie können bei diesen Spulen daher nicht genutzt werden.

### DARSTELLUNG DER ERFINDUNG

Es ist eine Aufgabe der vorliegenden Erfindung, ein Verfahren anzugeben, welches eine noch effizientere und somit kostengünstigere Herstellung einer Formspule für eine elektrische Maschine erlaubt. Zur Lösung dieser Aufgabe wird ein Verfahren vorgeschlagen, wie es in Anspruch 1 angegeben ist. Ausserdem wird in Anspruch 15 eine Formspule für den Stator oder Rotor einer elektrischen Maschine angegeben, welche gemäss einem derartigen Verfahren hergestellt ist. Vorteilhafte Ausgestaltungen der Erfindung sind in den abhängigen Ansprüchen angegeben

Die vorliegende Erfindung stellt also ein Verfahren zur Herstellung einer Formspule für den Einsatz in einem Stator oder Rotor einer elektrischen Maschine zur Verfügung, wobei das Verfahren zumindest die folgenden Schritte aufweist:
- Wickeln von zumindest einem Flachdraht zu einer in Umfangsrichtung durchgehend gebogen ausgebildeten Rundspule;
- Umwickeln dieser Rundspule mit Isolationsband; sowie
- Formen der mit dem Isolationsband umwickelten Rundspule in die endgültige Form einer Formspule.

Die genannten Verfahrensschritte werden also in der angegebenen Reihenfolge durchgeführt. Da einer oder mehrere Flachdrähte zu einer in Umfangsrichtung durchgehend gebogen ausgebildeten, also zum Beispiel ovalen oder kreisrunden Rundspule gewickelt werden, kann die Herstellung insgesamt auf äusserst einfache und effiziente Art und Weise erfolgen. Während des Umwickelns mit Isolationsband sind somit nicht nur diejenigen Bereiche der Rundspule, welche später die Stirnseiten der Formspule bilden, gebogen ausgebildet, sondern auch diejenigen Bereiche, welche später die Längsseiten bilden. Die Rundspule, welche dadurch eine grosse Spulenöffnung aufweist, kann aufgrund ihrer Form mit verhältnismässig geringem Aufwand mit Isolationsband umwickelt werden. Das angegebene Verfahren eignet sich somit insbesondere für eher kleine Spulen mit entsprechend kleinen Spulenöffnungen, wie dies beispielsweise bei Traktionsanwendungen oft der Fall ist.

Durch die Verwendung eines trockenen, das heisst nur mit Bindemittel zur mechanischen Fixierung behandelten Isolationsbandes kann die Spule in jedem Bereich verformt werden. Das trockene Isolationsband kann nach dem Formvorgang mit einem Harz imprägniert werden. Im Gegensatz zur Verwendung von bereits harzimprägnierten Isolationsbändern besteht bei einem trockenen Isolationsband nicht das Problem, dass dieses in der Formvorrichtung, mit welcher die Spule in ihre endgültige Form gebracht wird, verkleben würde. Ausserdem sind trockene Isolationsbänder bekannterweise weniger empfindlich in Bezug auf Beschädigungen durch äussere mechanische Einwirkungen. Durch die Verwendung eines trockenen Isolationsbandes wird es also möglich, dass sich die Form der Rundspule stark von der Endform der Formspule unterscheiden darf.

Eine verhältnismässig starke Verformung der Rundspule zur endgültigen Formspule insbesondere in den Bereichen der Spulenlängsseiten kann aber zum Beispiel auch durch die Verwendung eines Flachdrahtes erreicht werden, welcher aufgrund seines Materials und/oder geringen Dicke flexibel ausgebildet ist. Die beim Formvorgang entstehenden Kräfte sind dann kleiner.

Bei der elektrischen Maschine handelt es sich üblicherweise um einen Elektromotor oder einen Generator im Eisenbahnbereich.

Um eine optimale Verformbarkeit der Rundspule in den späteren Fertigungsschritten zu ermöglichen, ist es vorteilhaft, den Wickelzug beim Wickeln der Rundspule aus dem isolierten Flachdraht so zu wählen, dass die Rundspule durch das Aufwickeln nicht allzu stark versteift wird und damit leichter in die finale Form gebracht werden kann. Es hat sich herausgestellt, dass ein Wickelzug im Bereich von 50 bis 300 N, insbesondere in einem Bereich von 100 bis 200N, optimal ist, um einerseits eine gute Verformbarkeit der Rundspule zu gewährleisten und andererseits dennoch eine kompakte Formspule herzustellen.

Nachdem die Spule in die endgültige Form der Formspule gebracht worden ist, kann sie in die Längsnut eines Stator- oder Rotorblechpaketes eingesetzt werden. Die Rundspule sowie die Formspule bilden in der Regel jeweils eine umlaufend geschlossene Schleife mit einer seitlich umlaufend begrenzten Spulenöffnung. Die Formspule weist in ihrer endgültigen Form, wie auch die längliche Flachspule, meist zwei Spulenlängsseiten auf, welche zumindest entlang eines Teilbereiches, bevorzugt über einen Grossteil ihrer Längserstreckung, noch bevorzugter im Wesentlichen vollständig, parallel zueinander verlaufen. Die Spulenlängsseiten sind dabei insbesondere entlang eines Teilbereiches, bevorzugt über einen Grossteil ihrer Längserstreckung, noch bevorzugter im Wesentlichen vollständig geradlinig ausgebildet. Die Formspule weist zudem meist zwei die Endbereiche der Spulenlängsseiten miteinander verbindende Spulenstirnseiten auf, welche geradlinig oder gebogen ausgebildet sein können.

Um das Umwickeln mit Isolationsband zu vereinfachen, hat die Rundspule vorteilhaft im Wesentlichen eine insgesamt flache Form. Bei Formen in die endgültige Form kann die Spule insbesondere mit ihren Spulenlängsseiten aus der Spulenebene herausgebogen werden, um dadurch eine in allen drei Dimensionen gebogene Form einzunehmen. Insbesondere die Spulenstirnseiten der Formspule weisen dann jeweils eine komplexe Form mit Biegungen in allen drei Dimensionen auf.

Für das Wickeln des Flachdrahtes zu einer Rundspule wird bevorzugt ein Wickeldorn verwendet mit einer runden Aussenfläche, um welche herum der Flachdraht gewickelt wird. Die Aussenfläche des Wickeldorns definiert dann die Form der Spulenöffnung der Rundspule. Anstelle einer runden Aussenfläche kann der Wickeldorn aber zum Beispiel auch mehrere insbesondere zapfenförmige Wickelelemente aufweisen, um welche der Flachdraht herumgewickelt wird, so dass die Wickelelemente gemeinsam die Rundform der Spule vorgeben.

Üblicherweise ist der Flachdraht bereits vor dem Wickeln zu einer Rundspule mittels einer Drahtisolation isoliert.

Das Umwickeln der Rundspule mit Isolationsband erfolgt vorteilhaft maschinell mittels einer Wickelmaschine. Die runde, insbesondere kreisrunde Form der Spule erlaubt es, für die Umwicklung der Spule eine einfache und sehr schnell arbeitende Wickelmaschine zu verwenden. Für einen Grossteil der Spule ist also insbesondere keine Spezialmaschine oder gar eine Umwicklung von Hand notwendig. Bevorzugt wird die Rundspule im Wesentlichen vollständig, das heisst entlang ihres im Wesentlichen gesamten Umfangs, maschinell mit Isolationsband umwickelt. Das Umwickeln der Rundspule mittels der Wickelmaschine erfolgt dabei bevorzugt zumindest teilweise vollautomatisch. Das Isolationsband basiert bevorzugt auf Glimmer.

Bevorzugt wird eine Wickelmaschine verwendet, welche einen Wickelkopf aufweist, der beim Umwickeln um den zumindest einen zu einer Rundspule gewickelten Flachdraht herum rotiert. Am bevorzugt ringförmigen Wickelkopf sind vorteilhaft eine oder mehrere Bandrollen angebracht, welche während des Umwickelns der Rundspule mit dem Spulenträger um die zu isolierenden Spulenabschnitte rotieren. Falls die Rundspule eine geschlossene Schleife bildet mit einer seitlich umlaufend begrenzten Spulenöffnung, wie dies üblicherweise der Fall ist, wird der Wickelkopf durch die Spulenöffnung geführt, so dass die Bandrollen während der Rotation durch diese hindurch geführt werden. Aufgrund der runden Form der Spule ist dies beim erfindungsgemässen Verfahren auch bei Spulen möglich, welche eine verhältnismässig kleine Spulenöffnung haben.

Die Rundspule kann eine längliche, zum Beispiel ovale Form aufweisen. Die Spulenöffnung kann dann als Langloch ausgebildet sein. Bevorzugt weist die Rundspule aber eine im Wesentlichen kreisrunde Form mit einer insbesondere im Wesentlichen kreisrunden Spulenöffnung auf. Die Spulenöffnung hat dadurch im Hinblick auf das Umwickeln mit Isolationsband eine maximale Grösse. Die Rundspule hat zudem vorteilhaft eine insgesamt im Wesentlichen flache Form. Eine kreisrunde und flache Form der Rundspule eignet sich optimal für das Umwickeln, insbesondere das maschinelle Umwickeln, mit Isolationsband.

Bevorzugt wird die Rundspule in einem ersten Zwischenschritt in die Form einer länglichen Flachspule (Fisch) und in einem zweiten Zwischenschritt in die endgültige Form der Formspule gebracht. Dabei kann für den ersten Zwischenschritt eine erste Formvorrichtung und für den zweiten Zwischenschritt eine zweite Formvorrichtung verwendet werden.

Das Formen der Rundspule in die endgültige Form der Formspule, insbesondere in die Form der länglichen Flachspule, erfolgt bevorzugt mittels einer kombinierten Streck- und Pressvorrichtung. Die Spule kann zum Beispiel zuerst in eine längliche Form gestreckt bzw. auseinandergezogen werden, um danach in den Bereichen der Spulenlängsseiten bis zu einem Anschlag zusammengepresst zu werden, wobei das Zusammenpressen von einem gleichzeitigen Strecken bzw. Auseinanderziehen der Spule in den Bereichen der Spulenstirnseiten unterstützt werden kann.

Das Formen der Rundspule zu einer länglichen Flachspule (Fisch) erfolgt vorteilhaft dadurch, dass die Rundspule mittels zumindest eines Streckdorns entlang einer

Längsrichtung auseinandergezogen wird. Vorteilhaft erfolgt das Formen der Rundspule zur länglichen Flachspule zudem oder alternativ dadurch, dass die Rundspule mittels zumindest eines Presselements in eine im Wesentlichen senkrecht zu einer Längsrichtung stehenden Richtung in der Spulenebene zusammengepresst wird.

Für das Formen der Rundspule zur länglichen Flachspule wird bevorzugt zumindest ein Anschlagelement verwendet, um die beim Formvorgang zu erreichende Form der länglichen Flachspule zu definieren. Das Anschlagelement kann insbesondere dazu verwendet werden, die Form der Längsseiten der länglichen Flachspule und in der Regel somit der Formspule vorzugeben. Gemäss einer Weiterbildung der Erfindung wird das zumindest eine Anschlagelement während des Formens der Rundspule zur länglichen Flachspule in die Spulenebene und somit die Spulenöffnung hinein bewegt. Das Anschlagelement kann dadurch eine grössere Länge aufweisen als der Innendurchmesser der Spulenöffnung zu Beginn des Formvorgangs. Auf diese Weise kann das Anschlagelement insbesondere dazu verwendet werden, die Form der Längsseiten der länglichen Flachspule und in der Regel somit der Formspule entlang einem Grossteil ihrer Längserstreckung vorzugeben.

In einem weiteren oder kombinierten Schritt wird die längliche Flachspule vorteilhaft mit Hilfe einer herkömmlichen Spreizmaschine in die endgültige, dreidimensionale Formspule verformt.

Vorteilhaft wird das Isolationsband anschliessend an den Verfahrensschritt, in welchem die Rundspule in die endgültige Form der Formspule geformt wird, imprägniert, insbesondere mit einem Harz imprägniert. Das Imprägnieren des Isolationsbandes kann dabei mittels Ganztränktechnik erfolgen. In diesem Fall wird die Formspule zusammen mit dem Stator- oder Rotorblechpaket sowie vorteilhaft mit weiteren darin eingesetzten Formspulen insbesondere unter Vakuum zum Beispiel in ein Harzbad eingetaucht. Alternativ können die für einen Stator oder Rotor vorgesehenen Formspulen auch separat voneinander imprägniert werden. Für das Imprägnieren, insbesondere Vakuumimprägnieren, wird die Formspule in diesem Fall bevorzugt in einen Formkörper eingebracht, welcher im Wesentlichen der Geometrie der entsprechenden Längsnut des Stators oder Rotors entspricht. Anschliessend an das Imprägnieren wird die Spule vorteilhaft in einem Ofen ausgehärtet. Das Imprägnieren und anschliessende Aushärten dient vorteilhaft auch dazu, die Formspule zu verfestigen.

Die vorliegende Erfindung gibt ausserdem eine Formspule für den Stator oder Rotor einer elektrischen Maschine an, welche gemäss einem Verfahren entsprechend den obenstehenden Angaben hergestellt wurde.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Teilansicht des Vorgangs beim Wickeln von einem Flachdraht um einen Wickeldorn bei der Herstellung einer Rundspule gemäss einem erfindungsgemässen Verfahren;
- Fig. 2: eine perspektivische Teilansicht beim Vorgang des Umwickelns einer aus einem Flachdraht hergestellten Rundspule mit Isolationsband mittels einer Wickelmaschine gemäss einem erfindungsgemässen Verfahren;
- Fig. 3: eine schematische Ansicht von oben her des Vorgangs beim Formen einer mit Isolationsband umwickelten Rundspule zu einer länglichen Flachspule (Fisch) mittels einer kombinierten Streck- und Pressvorrichtung gemäss einem erfindungsgemässen Verfahren;
- Fig. 4: eine Querschnittsansicht durch in die Nut eines Statorblechkörpers eingesetzte Formspulen; sowie
- Fig. 5: ein Flussdiagramm zur Illustration der Abfolge der Verfahrensschritte eines erfindungsgemässen Verfahren.

### BESCHREIBUNG BEVORZUGTER AUSFÜHRUNGSFORMEN

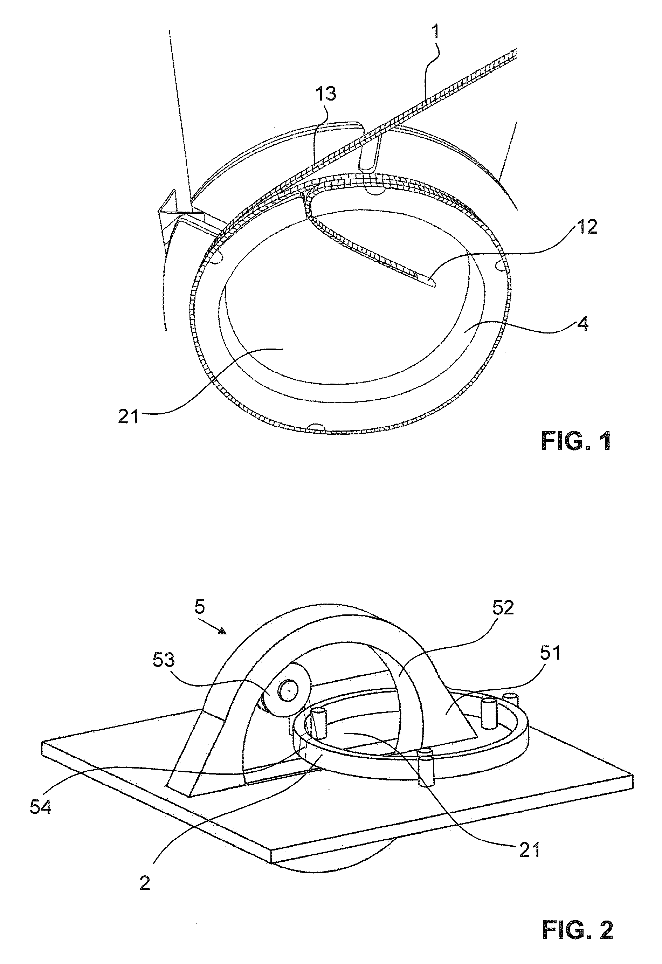

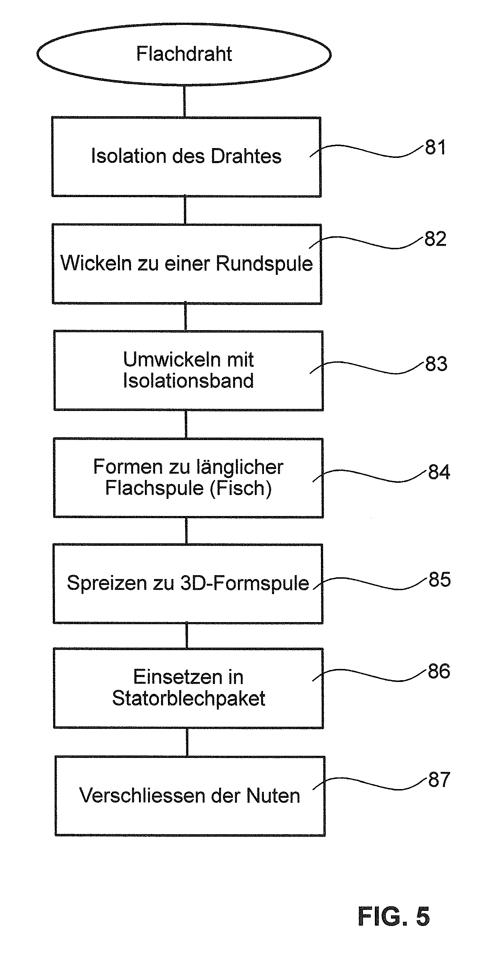

In den Figuren 1 bis 4 sind einzelne Schritte eines erfindungsgemässen Verfahrens zur Herstellung einer Formspule 3 für den Einsatz in einem Stator oder Rotor einer elektrischen Maschine gezeigt. In der Figur 5 ist die Abfolge von mehreren Verfahrensschritten bei einem beispielhaften, erfindungsgemässen Verfahren illustriert.

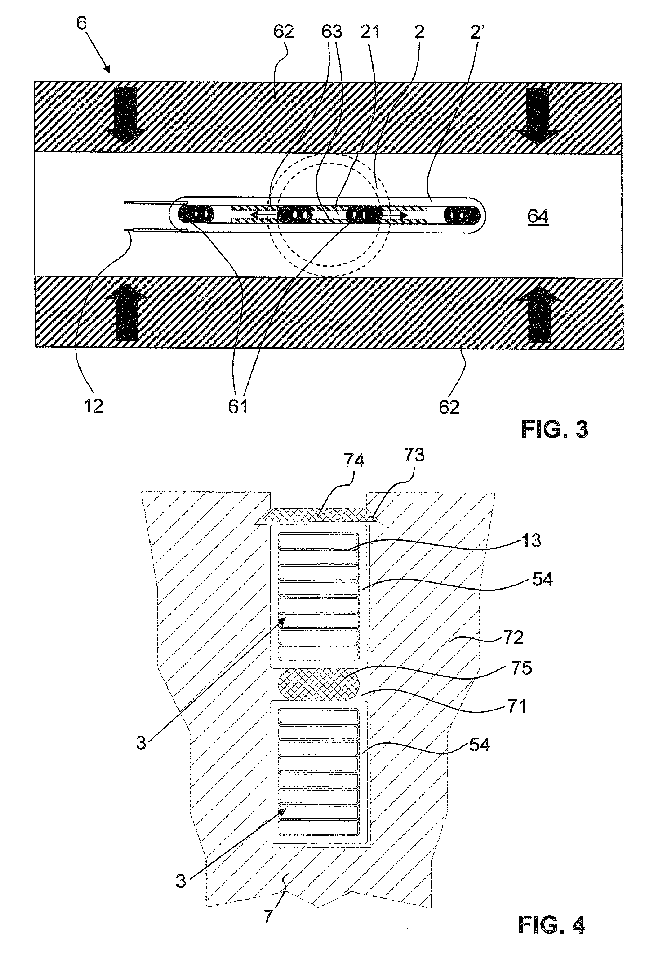

Als Ausgangspunkt eines beispielhaften, erfindungsgemässen Verfahrens wird ein Flachdraht 1 mit einem rechteckigen, massiven Querschnitt verwendet (siehe Figur 4)

In einem optionalen ersten Verfahrensschritt 81 (Figur 5) kann die Aussenseite des Flachdrahtes 1 elektrisch isoliert werden. Es wird dabei eine Drahtisolation 13 auf den Flachdraht 1 aufgebracht, welche eine äussere Umhüllung des Flachdrahtes 1 bildet.

Als Material für die Drahtisolation 13 kann beispielsweise eine Polyesterfolie oder eine Polyimidfolie verwendet werden. Es kann aber auch ein auf einem Folienträger aufgebrachtes Glimmerpaper verwendet werden. Die Drahtisolation 13 kann auch auf Aramidpapier, wie zum Beispiel das von der Firma Dupont vertriebene Produkt Nomex^{®}, oder auf Glasgewebe, einer Glasumspinnung oder einem Glasgeflecht basieren.

Die Drahtisolation 13 kann insbesondere bandförmig ausgebildet sein und entweder spiralförmig um den Flachdraht 1 herum gewickelt sein oder in Längsrichtung aufgebracht und um den Draht gewickelt werden. Das Anbringen der bandförmigen Drahtisolation 13 kann zum Beispiel halb überlappend erfolgen. Die Drahtisolation 13 kann aber auch gestossen aufgebracht werden, was bedeutet, dass die Seitenränder der bandförmigen Drahtisolation 13 von Spiralwindung zu Spiralwindung jeweils aneinander angrenzen ohne sich gegenseitig zu überlappen. Falls die Drahtisolation 13 gestossen aufgebracht wird, werden in der Regel zumindest zwei Lagen versetzt zueinander aufgebracht, wobei der Versatz typischerweise zum Beispiel 30 % oder 50 % der Bandbreite beträgt. Die Drahtisolation 13 kann eine beliebige Anzahl von Lagen umfassen, welche auf beliebige Art und Weise mit oder ohne gegenseitigen Versatz auf den Flachdraht 1 aufgebracht werden. Alternativ kann die Drahtisolation 13 auch aus einem aufgebrachten Lack bestehen.

Im Verfahrensschritt 82 wird der mit einer Drahtisolation 13 versehene Flachdraht 1 zu einer Rundspule 2 gewickelt. Dazu wird, wie es in der Figur 1 erkennbar ist, ein Wickeldorn 4 mit einer hier kreisrunden Aussenfläche verwendet, um welche herum der Flachdraht 1 gewickelt wird. Die Rundspule 2 erhält dadurch eine insgesamt im Wesentlichen flache Form mit einer im Wesentlichen kreisrunden Spulenöffnung 21. Die Spulenöffnung 21 ist umlaufend vom Flachdraht 1 begrenzt. Die Rundspule 2 ist somit in Umfangsrichtung durchgehend gebogen bzw. durchgehend konvex ausgebildet, was bedeutet, dass sie entlang ihrer Umfangsrichtung keine geradlinigen Abschnitte aufweist.

Das erste freie Drahtende 12 des Flachdrahtes 1, welches in der Figur 1 sichtbar ist, wird beim Wickeln auf dem Wickeldorn 4 zu einer Rundspule 2 in einer entsprechend dafür vorgesehenen Haltevorrichtung des Wickeldorns gehalten, so dass der Zugang zu diesem Drahtende 12 auch nach dem Wickelvorgang gewährleistet ist.

Die Rundspule 2 wird anschliessend, im Verfahrensschritt 83 (Figur 5), mittels einer Wickelmaschine 5 mit einem Isolationsband 54 umwickelt. Dieser Verfahrensschritt ist in der Figur 2 gezeigt. Das Isolationsband 54 dient dazu, die Rundspule 2 elektrisch nach aussen hin zu isolieren, so dass beim späteren Einsatz in der elektrischen Maschine keine Kurzschlussströme zum Blechpaket auftreten können. Das Isolationsband 54 bildet die Hauptisolation der Rundspule 2 bzw. der Formspule 3.

Die Wickelmaschine 5 weist eine Haltevorrichtung 51 auf, in welcher ein ringförmiger Wickelkopf 52 drehbar gelagert ist. Am Wickelkopf 52 sind zwei Bandrollen 53, von denen in der Figur 2 nur eine sichtbar ist, diametral gegenüberliegend zueinander angebracht, welche im Wesentlichen frei drehbar sind, und auf welchen jeweils ein Isolationsband 54 aufgewickelt ist.

Das Isolationsband 54 basiert bevorzugt auf Glimmer und ist zudem vorteilhaft beim Umwickeln der Rundspule 2 trocken, das heisst nicht zum Beispiel mit einem Harz imprägniert. Je nachdem, welches elektrische Spannungsniveau für die jeweilige Formspule 3 beim Einsatz in der elektrischen Maschine vorgesehen ist, kann eine entsprechende Anzahl von Lagen des Isolationsbandes 54 auf die Rundspule 2 aufgebracht werden. Alternativ oder ergänzend können eine oder mehrere Lagen des Isolationsbandes 54 auch manuell auf die Rundspule 2 aufgebracht werden. Das Isolationsband 54 kann insbesondere in den Bereichen der Drahtenden 12 von Hand aufgebracht werden. Während des in der Figur 2 gezeigten Isolationsvorgangs durchragt die Rundspule 2 den Wickelkopf 52 der Wickelmaschine 5 ebenso wie der Wickelkopf 52 selbst die Spulenöffnung 21 der Rundspule 2 durchragt. Der kreisförmige Wickelkopf 52 umgibt den Flachdraht 1 der Rundspule 2 dabei vollständig. Für den Umwicklungsvorgang wird das in der ersten Bandrolle 53 gelagerte Isolationsband 54 an der Aussenseite des den Wickelkopf 52 durchragenden Flachdrahtes 1 der Rundspule 2 befestigt. Ebenso wird das Isolationsband 54, welches in der zweiten Bandrolle 53 gelagert ist, an der Aussenseite der Rundspule 2 befestigt. Für die Umwicklung wird der Wickelkopf 52 dann um die Rundspule 2 gedreht, so dass er sich mit den Bandrollen 53 durch die Spulenöffnung 21 hindurch bewegt. Gleichzeitig wird die Rundspule 21 kontinuierlich in Umfangsrichtung bzw. entlang der Längsrichtung des Flachdrahtes 1 fortbewegt. Für den Antrieb des Wickelkopfs 52 ist ein an der Haltevorrichtung 51 angebrachter Antriebsmotor vorgesehen. Während sich der Wickelkopf 52 um den Flachdraht 1 der Rundspule 2 dreht, wird Isolationsband 54 von den beiden Bandrollen 53 abgerollt. Der Umwicklungsvorgang der Rundspule 2 mit Hilfe einer Wickelmaschine des Standes der Technik mit Wickelkopf 52, wie in der Figur 2 gezeigt, ist dem Fachmann hinlänglich bekannt.

Aufgrund der kreisrunden Form der Rundspule 2 weist die Spulenöffnung 21 eine maximale Grösse auf. Die Rundspule 2 ist dadurch optimal für die vollautomatische maschinelle Umwicklung mit Isolationsband 54 geeignet. Aufgrund der grossen Spulenöffnung 21 können insbesondere verhältnismässig grosse Bandrollen 53 verwendet werden, welche entsprechend weniger oft, im Idealfall während des Umwickelns einer Rundspule 2 sogar gar nie, ausgewechselt werden müssen. Die maschinelle Umwicklung ermöglicht eine regelmässige Umwicklung der Rundspule 2 mit genau vorbestimmbaren Wickelparametern wie Bandwinkel, Bandzug, Überlappung etc. Gleichzeitig kann die Umwicklung innert kurzer Zeit und mit minimalem Aufwand durchgeführt werden.

Nach Aufbringen der Hauptisolation, also des Isolationsbandes 54, kann diese allenfalls noch mit einem Nutglimmschutzband umhüllt werden. Dies ist erforderlich bei Maschinenspannungen grösser 1kV, um sogenannte Nutentladungen zu vermeiden. Das Nutglimmschutzband, welches beim Einsatz in der elektrischen Maschine direkt zwischen der Hauptisolation und dem Eisen des Stator- bzw. Rotorkerns zu liegen kommt, kann maschinell mittels der Wickelmaschine 5 oder von Hand aufgebracht werden. Optional kann in den Bereichen der späteren Spulenstirnseiten, noch ein Endenglimmschutzband aufgebracht werden, welches ausserhalb der Längsnuten 71 des Blechkörpers 7 (Fig. 4) zu liegen kommt, und allenfalls noch ein Schrumpfband angebracht werden.

Anschliessend wird die mit Isolationsband 54 umwickelte Rundspule 2 in einem weiteren Verfahrensschritt 84 (Figur 5) in die Form einer länglichen Flachspule 2' (auch als Fisch bezeichnet) gebracht. Die Rundspule 2 wird hierzu in eine Formvorrichtung 6 gebracht, wie sie schematisch in der Figur 3 gezeigt ist.

Die Anfangsform und -position der in die Formvorrichtung 6 gebrachten Rundspule 2 ist in der Figur 3 mit gestrichelten Linien gezeigt. Die Rundspule 2 wird derart in die Formvorrichtung 6 eingesetzt, dass die Spulenöffnung 21 von zwei Streckdornen 61 der Formvorrichtung 6 durchragt wird. Dabei liegt die Rundspule 2 auf der Oberfläche eines Tisches 64 der Formvorrichtung 6 auf und ist zudem zwischen zwei Presselementen 62 angeordnet. Die Formvorrichtung 6 kann zwei Anschlagplatten 63 aufweisen, welche zu Beginn des Formvorgangs jedoch noch im Tisch 64 versenkt sind und insbesondere nicht in die Spulenöffnung 21 hineinragen. Die Anschlagplatten 63 erstrecken sich parallel zueinander.

Die beiden Streckdorne 61 werden dann bis zum Anschlag mit der radialen Innenseite der Rundspule 2 nach aussen verschoben. Diese Anfangsposition der Streckdorne 61 ist in der Figur 3 gezeigt. Um die Rundspule 2 in eine längliche Form zu bringen, werden die Streckdorne 61 anschliessend in Richtung der in der Figur 3 gezeigten Pfeile weiter nach aussen und voneinander weg verschoben, so dass die Rundspule 2 entlang einer Längsrichtung gestreckt oder, anders ausgedrückt, auseinandergezogen wird.

Gleichzeitig oder anschliessend an das Auseinanderziehen der Rundspule 2 mittels der Streckdorne 61, wird die Spule mittels der beiden Presselemente 62 in eine senkrecht zur Längsrichtung stehende Richtung von den Seiten her zusammengepresst. Der Streckvorgang wird dadurch durch den Pressvorgang unterstützt bzw. ergänzt. Bei der Formvorrichtung 6 handelt es sich somit um eine kombinierte Streck- und Pressvorrichtung, welche zum Beispiel pneumatisch und/oder hydraulisch betrieben sein kann.

Sobald die beiden Streckdorne 61 bis zu einem bestimmten Punkt auseinandergefahren sind und die Spulenöffnung 21 eine gewisse Längserstreckung in Längsrichtung aufweist, können die beiden Anschlagplatten 63 aus dem Tisch 64 nach oben gefahren werden, so dass sie in die Spulenöffnung 21 hineinragen. Der Streck- und Pressvorgang wird fortgesetzt bis die Längsseiten der Spule an den Anschlagplatten 63 anschlagen und durch diese in eine geradlinige Endform einer länglichen Flachspule 2' gebracht werden. Die Streckdorne 61 nehmen dann die in der Figur 3 gezeigte Endposition im Bereich der Spulenstirnseiten der länglichen Flachspule 2' ein.

Durch die Verwendung eines trockenen Isolationsbandes 54 kann dieses nicht in der Formvorrichtung 6 verkleben. Ausserdem ist aufgrund der geringeren Empfindlichkeit des Isolationsbandes 54 das Risiko vermindert, dass dieses während des Formvorgangs beschädigt wird. Es kann dadurch, wie es im vorliegenden Ausführungsbeispiel der Fall ist, eine verhältnismässig grosse Formveränderung von der kreisrunden Rundspule 2 zur länglichen Formspule 3 stattfinden, ohne dass die Isolation beschädigt wird.

Im Nutbereich der länglichen Flachspule 2', also in den Bereichen der Spulenlängsseiten, kann dann ein Nutglimmschutzband aufgebracht werden, falls dies nicht bereits erfolgt ist. Dies ist üblicherweise erforderlich, falls die elektrische Maschine für Spannungen von mehr als 1 kV ausgelegt sein soll. Des Weiteren, falls noch nicht erfolgt, kann in den Wickelkopfbereichen, das heisst in den Bereichen der Spulenstirnseiten, jeweils ein Endenglimmschutzband aufgebracht werden. Ein Endenglimmschutzband ist meist dann notwendig, wenn die elektrische Maschine bei Spannungen von mehr als 3 kV betrieben werden soll.

Die in der Figur 3 mit durchgezogenen Linien dargestellte flache Spulenform kann die endgültige Form der Formspule 3 darstellen. Die Formspule 3 kann somit eine insgesamt flache Endform aufweisen oder die längliche Flachspule 2' kann in einem zusätzlichen Verfahrensschritt 85 (Fig. 5) in die endgültige, dreidimensionale Formspule verformt werden. Die Formvorrichtung 6 kann hierzu derart ausgebildet sein, dass die Spule während des Streck- und Pressvorgangs gleichzeitig zum Beispiel mit ihren Längsseiten aus der ursprünglichen Spulenebene herausgebogen wird, um zum Schluss des Streck- und Pressvorgangs eine komplexe dreidimensionale Endform einzunehmen. In diesem Fall werden die Verfahrensschritte 84 und 85 also kombiniert und gleichzeitig ausgeführt, und eine einzelne Formvorrichtung 6 dient für den gesamten Formvorgang von der Rundspule 2 zur endgültigen Formspule 3.

Die in der Figur 3 mit durchgezogenen Linien dargestellte Spulenform einer länglichen Flachspule 2' kann aber auch eine Zwischenform der Spule darstellen, in welcher die Spule eine insgesamt noch flache Ausgestaltung hat. In diesem Fall kann die Spule im Anschluss an den Streck- und Pressvorgang in der Formvorrichtung 6 in eine weitere zweite Formvorrichtung eingelegt werden, in welcher dann die Spule in die endgültige Form der Formspule 3 gebracht wird. Die Verfahrensschritte 84 und 85 werden dann also nacheinander und in verschiedenen Formvorrichtungen durchgeführt. Bei dieser zweiten Formvorrichtung kann es sich insbesondere um eine herkömmliche Formvorrichtung handeln, welche üblicherweise im klassischen Verfahren oder in der Flat Coil Technologie verwendet wird, um einen Fisch zu einer Formspule zu verformen, also um eine flache Spule mit bereits geradlinigen Längsseiten in die komplexe dreidimensionale Endform der Formspule 3 zu bringen.

Im Verfahrensschritt 86 (Fig. 5) wird die Formspule 3 dann in eine Längsnut 71 eines Blechkörpers 7 eingesetzt. Die Längsnut 71 wird dabei in Umfangsrichtung des in der Figur 4 nur teilweise gezeigten Blechkörpers 7 von den Statorzähnen 72 des Blechkörpers 7 begrenzt. In einer Längsnut 71 können mehrere Formspulen 3 eingelegt und durch Abstandshalter 75 voneinander getrennt sein, wie es in der Figur 4 gezeigt ist.

Im letzten Verfahrensschritt 87 (Fig. 5) werden die Längsnuten 71 verschlossen. Dies kann, muss aber nicht, mit jeweils einem Verschlusskeil 74 erreicht werden, der in Einsatzrillen 73 eingesetzt wird, welche an den Statorzähnen 72 des Blechkörpers 7 vorgesehen sind.

Nach dem Einlegen der Formspulen 3 in die Längsnuten des Blechkörpers 7 kann dieser mittels Ganztränktechnik in einem Harzbad unter Vakuum imprägniert werden. Das entsprechende Vorgehen, welches nach dem Verfahrensschritt 87 ausgeführt wird, ist dem Fachmann bekannt.

Alternativ können die Formspulen 3 auch jeweils separat voneinander und getrennt vom Blechkörper 7 in einem Harzbad und unter Vakuum imprägniert werden. In diesem Fall werden die Formspulen 3 jeweils in ihrer endgültigen Form in einen entsprechend vorbereiteten und geformten Formkörper eingebracht, welcher im Wesentlichen der Geometrie der Längsnut 71 entspricht. Vor dem Einbringen der Formspule 3 wird eine Trennfolie in den Formkörper eingelegt, um die Formspule 3 vom Formkörper zu trennen. Der Formkörper wird dann verschlossen und die darin aufgenommene Formspule 3 mittels eines Vakuumimprägnierverfahrens mit einem Harz imprägniert. Nach dem Aushärten in einem Ofen wird die Formspule 3 aus dem Formkörper herausgenommen und die Trennfolie sowie gegebenenfalls die in den Bereichen der Spulenstirnseiten zuvor aufgebrachten Schrumpfbänder entfernt. Auch dieses Vorgehen, welches zwischen den Verfahrensschritten 85 und 86 ausgeführt wird, ist dem Fachmann hinlänglich bekannt.

Die vorliegende Erfindung ist selbstverständlich nicht auf das erläuterte Ausführungsbeispiel beschränkt, und eine Vielzahl von Abwandlungen ist möglich. So kann zum Beispiel die Wickelmaschine eine komplett andere Ausgestaltung aufweisen, als dies in der Figur 2 dargestellt ist. Die Verwendung einer Wickelmaschine kann sogar gänzlich entfallen, und die Rundspule 2 kann von Hand mit Isolationsband 54 umwickelt werden. Die grosse, insbesondere kreisrunde Spulenöffnung 21 der Rundspule 2 erlaubt auch dann eine einfache Umwicklung. Auch die Formvorrichtung 6 kann selbstverständlich eine beliebige andere Ausgestaltung aufweisen und kann insbesondere auch als reine Streck- oder reine Pressvorrichtung ausgebildet sein. Eine beliebige Anzahl weiterer Verfahrensschritte können hinzukommen, und eine Vielzahl weiterer Abwandlungen ist denkbar.

**BEZUGSZEICHENLISTE**

| | | | |
|---|---|---|---|
| 1 | Flachdraht | 53 | Bandrolle |
| | | 54 | Isolationsband |
| 12 | Drahtende | | |
| 13 | Drahtisolation | 6 | Formvorrichtung |
| | | 61 | Streckdorn |
| 2 | Rundspule | 62 | Presselement |
| 21 | Spulenöffnung | 63 | Anschlagplatte |
| | | 64 | Tisch |
| 2' | Längliche Flachspule (Fisch) | | |
| | | 7 | Blechkörper |
| 3 | Formspule | 71 | Längsnut |
| | | 72 | Statorzahn |
| 4 | Wickeldorn | 73 | Einsatzrille |
| | | 74 | Verschlusskeil |
| 5 | Wickelmaschine | 75 | Abstandshalter |
| 51 | Haltevorrichtung | | |
| 52 | Wickelkopf | 81-87 | Verfahrensschritte |

## Patentansprüche

1. Verfahren zur Herstellung einer Formspule (3) für den Einsatz in einem Stator oder Rotor einer elektrischen Maschine, aufweisend zumindest die folgenden Schritte:
- Wickeln von zumindest einem Flachdraht (1) zu einer in Umfangsrichtung durchgehend gebogen ausgebildeten Rundspule (2);
- Umwickeln dieser Rundspule (2) mit Isolationsband (54); sowie
- Formen der mit dem Isolationsband (54) umwickelten Rundspule (2) in die endgültige Form einer Formspule (3).

2. Verfahren nach Anspruch 1, wobei das Umwickeln der Rundspule (2) mit Isolationsband (54) maschinell mittels einer Wickelmaschine (5) erfolgt.

3. Verfahren nach Anspruch 2, wobei das Umwickeln der Rundspule (2) mittels der Wickelmaschine (5) zumindest teilweise vollautomatisch erfolgt.

4. Verfahren nach Anspruch 2 oder 3, wobei die Wickelmaschine (5) einen Wickelkopf (52) aufweist, welcher beim Umwickeln um den zumindest einen zu einer Rundspule (2) gewickelten Flachdraht (1) herum rotiert.

5. Verfahren nach einem der vorhergehenden Ansprüche, wobei die Rundspule (2) eine im Wesentlichen kreisrunde Form aufweist.

6. Verfahren nach einem der vorhergehenden Ansprüche, wobei für das Umwickeln der Rundspule (2) ein trockenes Isolationsband (54) verwendet wird.

7. Verfahren nach einem der vorhergehenden Ansprüche, wobei die Rundspule (2) in einem ersten Zwischenschritt (84) in die Form einer länglichen Flachspule (2') und in einem zweiten Zwischenschritt (85) in die endgültige Form der Formspule (3) gebracht wird.

8. Verfahren nach Anspruch 7, wobei für den ersten Zwischenschritt eine erste Formvorrichtung (6) und für den zweiten Zwischenschritt eine zweite Formvorrichtung verwendet wird.

9. Verfahren nach Anspruch 7 oder 8, wobei das Formen der Rundspule (2) in die Form einer länglichen Flachspule (2') mittels einer kombinierten Streck- und Pressvorrichtung (6) erfolgt.

10. Verfahren nach einem der Ansprüche 7 bis 9, wobei das Formen der Rundspule (2) zur länglichen Flachspule (2') dadurch erfolgt, dass die Rundspule (2) mittels zumindest eines Streckdorns (61) entlang einer Längsrichtung auseinandergezogen wird.

11. Verfahren nach einem der Ansprüche 7 bis 10, wobei das Formen der Rundspule (2) zur länglichen Flachspule (2') zudem dadurch erfolgt, dass die Rundspule (2) mittels zumindest eines Presselements (62) in eine im Wesentlichen senkrecht zur Längsrichtung stehende Richtung zusammengepresst wird.

12. Verfahren nach einem der vorhergehenden Ansprüche, wobei für das Formen der Rundspule (2) zur Formspule (3) und insbesondere zur länglichen Flachspule (2') zumindest ein Anschlagelement (63) verwendet wird, und wobei bevorzugt das zumindest eine Anschlagelement (63) während des Formens der Rundspule (2) zur Formspule (3) in die Spulenebene hinein bewegt wird.

13. Verfahren nach einem der vorhergehenden Ansprüche, wobei die Formspule (3) in ihrer endgültigen Form zwei parallel zueinander verlaufende Längsseiten aufweist.

14. Verfahren nach einem der vorhergehenden Ansprüche, wobei das Isolationsband (54) anschliessend an den Verfahrensschritt, in welchem die Rundspule (2) in die endgültige Form der Formspule (3) geformt wird, imprägniert wird, insbesondere mit einem Harz imprägniert wird.

15. Formspule (3) für den Stator oder Rotor einer elektrischen Maschine, hergestellt gemäss einem der in den Ansprüchen 1 bis 14 angegebenen Verfahren.
